# EUROPÄISCHE PATENTSCHRIFT

(11) **EP 0 482 430 B1**
(45) Veröffentlichungstag und Bekanntmachung des Hinweises auf die Patenterteilung: **23.11.1994**
(21) Anmeldenummer: 91117239.3
(22) Anmeldetag: 09.10.1991
(51) Int. Cl.: F16D 65/46, F16D 65/56, F16D 65/22, B60T 7/20

(54) **Innenbackenbremse mit Nachstelleinrichtung**
Internal shoe brake with adjusting device
Frein à mâchoires internes à dispositif de rajustage

(30) Priorität: 23.10.1990 DE 9014674 U
(43) Veröffentlichungstag der Anmeldung: 29.04.1992
(73) Patentinhaber: Knott GmbH, D-83125 Eggstätt (DE)
(72) Erfinder: Knott, Valentin, W-8201 Eggstätt (DE); Hofstetter, Hermann, W-8221 Seeon (DE)
(74) Vertreter: Flach, Dieter Rolf Paul, Dipl.-Phys.

(56) Entgegenhaltungen:
- EP-A- 0 184 092
- DE-B- 2 123 373
- DE-C- 3 304 593
- DE-U- 6 947 220
- DE-U- 8 910 474
- DE-U- 9 014 674
- FR-A- 1 379 532
- GB-A- 552 568

## Beschreibung

Die Erfindung betrifft eine Innenbackenbremse mit Nachstelleinrichtung für auflaufgebremste Anhänger nach dem Oberbegriff des Anspruches 1.

Eine Innenbackenbremse für auflaufgebremste Anhänger mit einem Spreizschloß ist beispielsweise aus der EP 0 184 092 B1 bekannt geworden. Das darin gezeigte üblicherweise verwandte Spreizschloß umfaßt einen Spreizstössel und einen Spreizhebel, die an einer Seite gelenkig miteinander in Verbindung stehen, wobei sich der Spreizstössel an seinem einen freien Ende an der einen Bremsbacke und ein Hebelarm des Spreizhebels sich an der anderen Bremsbacke abstützen. Durch Einleitung von Zugkräften und eine Zugkraftbewegung über ein Bremsseil wird dann der Bremshebel verschwenkt, und zwar um einen Drehpunkt, der durch den Anlageabschnitt seines Hebelarmes am Steg der anderen Bremsbacke gebildet wird. Dadurch werden die beiden Bremsbacken gegensinnig auseinandergedrückt, um unter Anlage an der Bremstrommel die Bremskräfte aufzubringen.

Sofern bei einer derartigen Innenbackenbremse keine Nachstelleinrichtung vorgesehen ist, stützen sich die beiden Bremsbacken gegenüberliegend zum Spreizschloß an einem mit dem Bremsteller fest verbundenen Widerlager ab. Soll eine Nachstelleinrichtung verwandt werden, so wird diese üblicherweise dann anstelle des erwähnten Widerlagers eingebaut, und zwar unabhängig davon, ob es sich um eine manuelle oder eine automatische Nachstelleinrichtung handelt. Eine automatische Nachstelleinrichtung ist beispielsweise aus der DE 33 04 593 C2 sowie aus dem G 89 10 474 U1 bekannt geworden.

Aus Sicherheitsgründen ist der Bauaufwand für derartige Innenbackenbremsen vor allem auch für das Spreizschloß und die Nachstelleinrichtung beachtlich.

Eine gattungsbildende Innenbackenbremse für Kraftfahrzeug-Anhänger ist aus der DE-U-69 47 220 bekannt geworden. Diese Innenbackenbremse für auflaufgebremste Anhänger weist auch eine in dem Spreizschloß integrierte manuelle Nachstelleinrichtung auf. Die Nachstelleinrichtung umfaßt dazu eine Nachstellhülse, auf welcher als Betätigungsglied ein Nachstellzahnrad verdrehfest sitzt. Die Nachstellhülse wirkt über ein Innengewinde mit einem Gewindeschaft zusammen, der nicht-verdrehbar in der Nachstellhülse sitzt und sich an einem Ende der Bremsbacke abstützt. Sollte der Bremsbelag zu stark abgearbeitet sein, so kann dann in betreffenden Abständen manuell das Zahnrad und damit die Hülse relativ zum Gewindeschaft verdreht werden, wodurch die insgesamt wirksame Axiallänge des Spreizschlosses bereits bei nicht betätigter Bremse vergrößert und dadurch der Reibbelagverschleiß ausgeglichen werden kann.

Aufgabe der vorliegenden Erfindung ist es ausgehend von dem zuletzt genannten gattungsbildenden Stand der Technik eine weiterentwickelte Innenbackenbremse für auflaufgebremste Anhänger zu schaffen, die mit einem Spreizschloß arbeitet und zudem noch funktionstüchtiger und -sicherer ist.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Durch die vorliegende Erfindung wird eine deutlich verbesserte Innenbackenbremse für auflaufgebremste Anhänger vorgeschlagen, wodurch die Sicherheit derartiger auflaufgebremster Anhänger nochmals deutlich verbessert und erhöht werden kann. Dabei ist der Aufbau der Innenbackenbremse und vor allem der Betätigungseinrichtung einschließlich der Nachstelleinrichtung vergleichsweise einfach aufgebaut.

Erfindungsgemäß ist vorgesehen, daß eine Nachstellung stets automatisch dann bewirkt wird, wenn der Verschleiß der Bremsbeläge zu groß geworden ist. Eine automatische Nachstellung erhöht dabei naturgegebenermaßen deutlich die Sicherheit gegenüber einer manuellen Nachstellung, die in aller Regel eben nicht oder nicht zum richtigen Zeitpunkt oder nicht im richtigen Ausmaß vorgenommen wird. Unterbleibt eine manuelle Nachstellung, so beeinträchtigt dies die ausreichende Wirkung der Bremsen im Bedarfsfall. Wird eine manuelle Nachstellung zu stark vorgenommen, so können im schlimmsten Fall die Bremsen blockieren. Beides hätte verhängsnisvolle Folgen.

Vor allem aber ist erfindungsgemäß vorgesehen, daß die Innenbackenbremse für auflaufgebremste Anhänger eine Rückfahrautomatik umfaßt. Dies bedeutet, daß im Auflauffalle zwar die gewünschte Bremsung stets gewährleistet ist, daß aber beim Rangieren bei Rückwärtsfahrt durch die Rückfahrautomatik die ansonsten an sich beim Auflaufbremsen erfolgende Bremsung unterbleibt. Hier ist erfindungsgemäß ferner vorgesehen, daß bei Rückwährtsfahrt - selbst wenn an sich eine Nachstellung erfolgen könnte - eine derartige Nachstellung aus Sicherheitsgründen unterbleibt. Mit anderen Worten sind Maßnahmen vorgesehen, daß eine Nachstellung nur bei Bremsung in Vorwärtsfahrt, also Vorwärtsdrehung der Bremstrommel erfolgen kann.

In einer besonders bevorzugten Ausführungsform der Erfindung ist dazu vorgesehen, daß ein die Nachstellung auslösendes Verbindungsglied zwischen einem Nachstellhebel und einer Bremsbacke so an seinen Verbindungsstellen wirksam ist, daß eine Nachstellung bei Rückwärtsfahrt sicher unterbleibt.

In einer besonders bevorzugten Ausführungsform der Erfindung ist dazu das eine Ende des Verbindungsgliedes in einer Langlochausnehmung verankert, wobei im Bereich dieser Langlochausnehmung eine mit der einen Bremsbacke in Verbindung stehende Nase derart eingreift, daß das Verbindungsglied bei Bremsung in Vorwärtsfahrt axial unverschieblich gehalten ist, und daß bei Rückwärtsdrehung der Bremstrommel die Sicherungsnase die Langlochöffnung freigibt, so daß bei an sich erfolgender Bremsung und nach auswärts Schwenken der Bremsbacken das Verbindungsglied nicht mitgenommen und damit eine Nachstellung nicht bewirkt werden kann.

Die Erfindung wird nachfolgend anhand eines Ausführungsbeispieles erläutert. Dabei zeigen im einzelnen.
- Figur 1 :: eine schematische Seitenansicht einer erfindungsgemäßen Innenbackenbremse mit Rückfahrautomatik und mit einer automatischen Nachstelleinrichtung;
- Figur 2 :: eine schematische Schnittdarstellung durch das Spreizschloß;
- Figur 3a :: eine Schnittdarstellung quer zur Axialrichtung der Nachstelleinrichtung im Bereich einer Nachstellhülse;
- Figur 3b:: eine vergrößerte axiale Schnittdarstellung durch die Nachstelleinrichtung; und
- Figur 4 :: eine vergrößerte Detaildarstellung aus Figur 1.

In den Figuren ist eine Innenbackenbremse mit den Bremsbacken 1 und 3 gezeigt, die sich an ihrem einen Ende an einem am Bremsschild 5 gehaltenen Widerlager 7 abstützen. Die Innenbackenbremse weist dabei einen zweiteiligen Aufbau mit einem Bremsbackenträger 3' und einem Belagträger 3'' auf, wie er grundsätzlich aus der DE-C3-22 48 061 bekannt ist, so daß eine Beschreibung insoweit übergangen werden kann.

Zwischen den gegenüberliegenden Enden der beiden Bremsbacken 1 bzw. 3 ist ein Spreizschloß 9 mit einem Spreizstössel 11 und einem Spreizhebel 13 untergebracht. Die Bremsbacke 1 und der Bremsbackenträger 3' ist dabei, wie üblich, mit einem in Radialrichtung verlaufenden Steg 15 versehen, an welchem das Spreizschloß angreift.

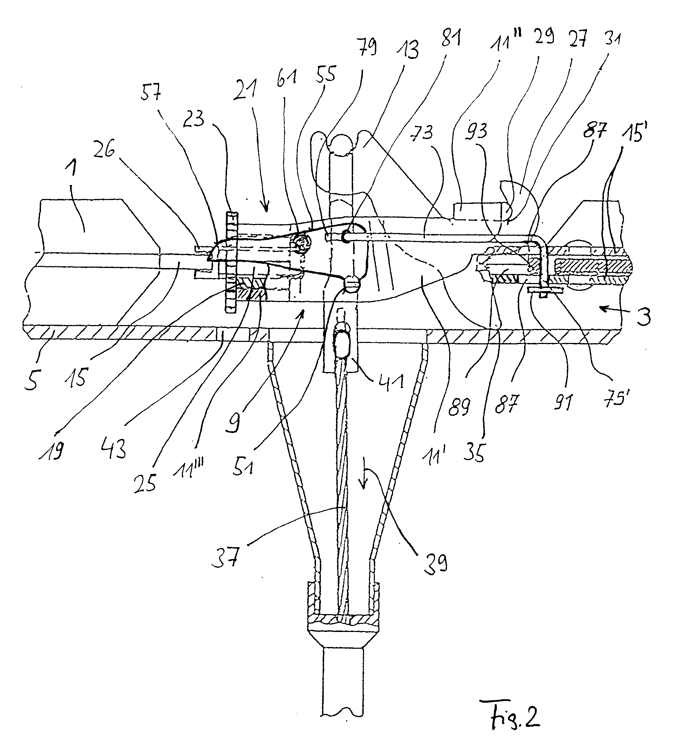

Der einteilige Spreizstössel 11 besteht im wesentlichen aus zwei Seitenteilen 11', die am einen Ende, an welchen, der Spreizstössel mit dem Spreizhebel 13 zusammenwirkt, über einen Querverbindungssteg 11'' (Fig.2) verbunden sind.

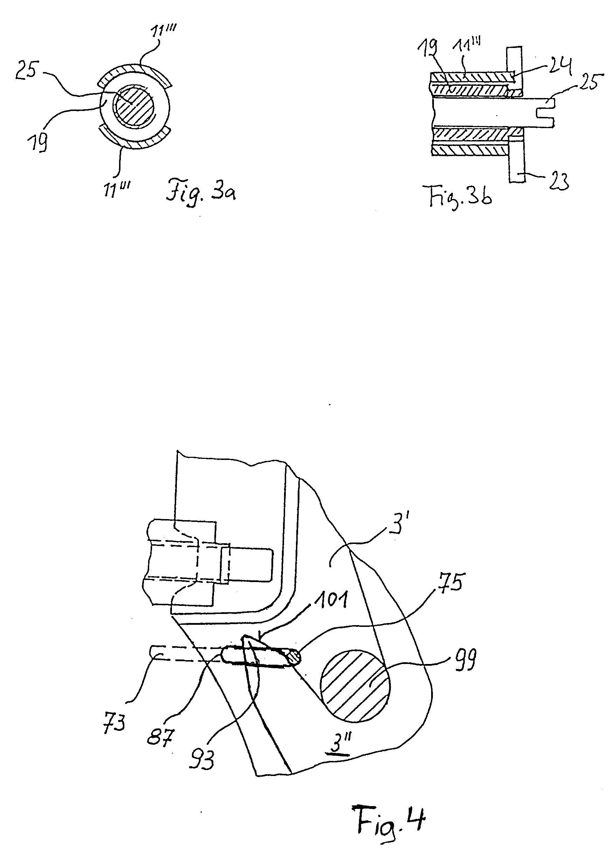

Am freien Ende sind die beiden Seitenteile 11' zu einer Halbzylinderform 11''' (Fig 3a und 3b) mit einer nach innen versetzt liegenden Ringschulter geformt. Wie aus Figur 3 ersichtlich ist, müssen die Halbzylinderformen 11''' nicht eine volle Halbkreisbogenform bilden. Es genügt vielmehr, wenn sie die zwischen den beiden Halbzylinderformen 11''' eingesetzte Nachstellhülse 19 so umgreifen, daß diese durch die beiden Halbzylinderformen 11''' gegen ein seitliches Herausfallen gesichert ist. Der so erläuterte Spreizstössel 11 kann also aus einem flachen Stahlmaterial gestanzt und, wie beschrieben und in den Zeichnungen dargestellt, in die endgültige Form gebogen und geprägt werden.

Im gezeigten Ausführungsbeispiel ist also die Nachstelleinrichtung 21 in unmittelbarer Axialverlängerung des stirnseitigen Endes des Spreizstössels 11 vorgesehen und umfaßt die bereits erwähnte Nachstellhülse 19, die an ihrem auf die zugeordnete Bremsbacke 1 zu liegenden Ende mit einem fest verbundenen Nachstellzahnrad 23 verbunden ist.

Beim Zusammenbau muß die Nachstellhülse 19 lediglich in die durch die beiden gegenüberliegenden Halbzylinderformen 11''' gebildete hohlzylinderförmige Aufnahme eingesetzt werden, bis das an der einen Stirnseite vorgesehene Nachstellzahnrad 23 stirnseitig an den Halbzylinderformen 11''' des Spreizstössels 11 aufliegt.

In Figur 3b ist in der Schnittdarstellung gezeigt, daß vorzugsweise zumindest eine Halbzylinderform 11''' stirnseitig mit einer in axialer Richtung auf das Nachstellzahnrad 23 etwas vorstehenden, durch eine Prägung gebildeten Nase 24 versehen ist, welche in der Ruhestellung in eine Zahnlücke zwischen zwei benachbarten Zähnen des Nachstellzahnrades 23 eingreift. Diese Nase 24 kann als leicht wellenförmige Erhebung, als sog. Wellenberg ausgebildet sein. Durch die Federeinrichtung 33 ist in jeder Betriebsstellung das Nachstellzahnrad an den stirnseitigen Begrenzungsrand der Halbzylinderformdern 11''' anliegend gehalten. Durch die in eine Zahnlücke leicht eingreifende Nase 24 wird das Nachstellzahnrad 23 gegen ein unbeabsichtigtes Verdrehen gesichert.

Die Nachstellhülse 19 ist mit einem Innengewinde versehen, in welchem ein Nachstellbolzen 25 mit Außengewinde drehbar eingesetzt ist. Der Nachstellbolzen 25 wird durch eine Schlitzausnehmung 26 unverdrehbar am Steg 15 der zugeordneten Bremsbacke 1 gehalten.

Aus der Zeichnung ist ersichtlich, daß der Spreizhebel 13 mit seinem Verschwenkabschnitt 27 am entsprechenden Steg der gegenüberliegenden Bremsbacke 3, d.h am Bremsbackenträger 3' angreift, wodurch die Verschwenkachse bei Einleitung von Bremskräften gebildet wird. Am Querverbindungssteg 11'' des Spreizstössels 11 ist ein im Querschnitt etwa halbzylinderförmig ausgebildeter Anlageabschnitt 29 vorgesehen, der in eine entsprechende konkave Aufnahmeöffnung 31 im Spreizhebel 13 eingreift. Durch diese Konstruktion kann der Spreizstössel 11 und der Spreizhebel 13 auf einfachste Weise zusammengefügt werden, da eine ansonsten übliche integrierte Verschwenkachse, an der der Spreizstössel 11 mit dem Spreizhebel 13 verbunden ist, wegfällt.

In Neutralstellung der Bremse bei nichteingeleiteten Bremskräften sind die beiden Bremsbacken 1 und 3 durch geeignete Federeinrichtungen 33 aufeinander zu in Vorspannrichtung gehalten. Der Hebelansatz 35 liegt stets an der Innenseite des Bremsschildes 5 an.

Werden über das in Figur 2 dargestellte Bremsseil 37 in Zugrichtung 39 Bremskräfte eingeleitet, so wird über eine Zugöse 41, die einmal am Bremsseilzug-Ende und zum anderen am freien Ende des Spreizhebels 13 eingehängt ist, eine Verschwenkung des Spreizhebels 13 im Gegenuhrzeigersinne um seinen Verschwenkabschnitt 27 eingeleitet, wodurch das Spreizschloß 9 schwimmend in Spreizrichtung wirksam wird und der Spreizhebel 13 an seinem Bremsbacken-Anlageabschnitt 28 Druck auf die Bremsbacke 3, d.h. den Bremsbackenträger 3' und der Spreizstössel 11 über die Nachstelleinrichtung 21, d.h. im konkreten über die Halbzylinderformen 11''', das Nachstellzahnrand 23 und den im Inneren der Nachstellhülse 19 über den Gewindeeingriff gehaltenen Nachstellbolzen 25 eine Kraft auf die andere Bremsbacke 1 ausübt.

Soll eine manuelle Einstellung vorgenommen werden, so kann jederzeit über eine im Bremsschild 5 oberhalb des Nachstellzahnrades 23 eingebrachte Öffnung 43 das Nachstellzahnrad entsprechend verdreht werden, so daß bei entsprechender Drehrichtung des Nachstellzahnrades 23 und damit der Nachstellhülse 19 der an der Bremsbacke 1 verdrehsicher verankerte Nachstellbolzen 25 aus der Nachstellhülse 19 herausgedreht wird.

Bei dem Ausführungsbeispiel gemäß Figur 2 ist am Ende des Bowdenzuges ein zweischaliger Abdeckkörper eingesetzt, so daß bei dieser Ausführungsform der Bowdenzug im wesentlichen quer vom Bremsschild 5 aus wegverläuft.

Um eine automatische Nachstellung zu ermöglichen, ist ferner an einem Seitenteil 11' des Spreizstössels 11 eine Bohrung 51 eingebracht ist, in welcher eine abgewinkelte Lasche 53 eines Nachstellhebels 55 mit einer am Nachstellzahnrad 23 angreifenden Nachstellklinke 57 eingreift. Die Bohrung 51 bildet somit gleichzeitig die Drehachse für den Nachstellhebel 55.

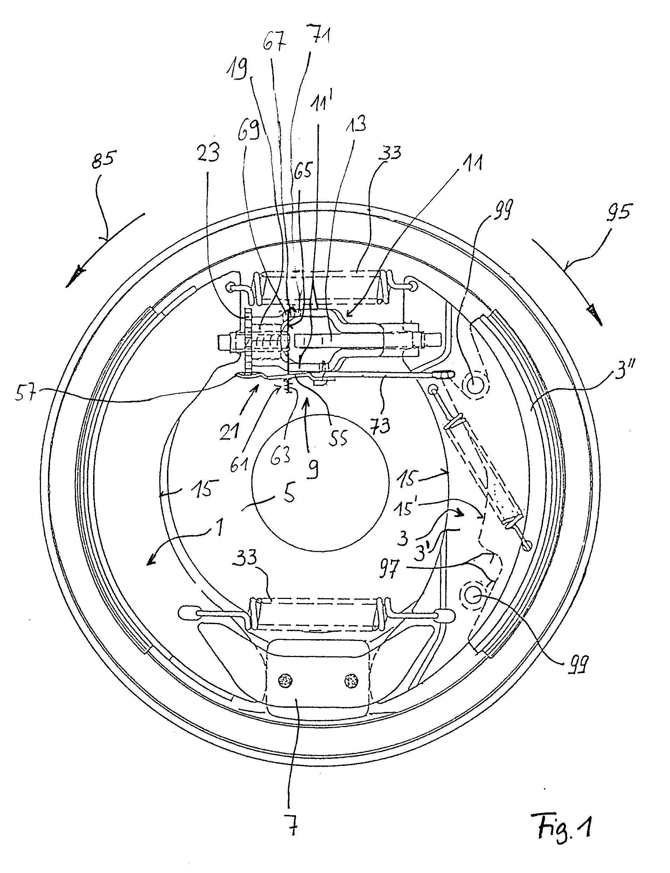

Um einen sicheren Halt des Nachstellhebels 55 und stets einen sicheren Eingriff der Nachstellklinke 57 in dem Nachstellzahnrad 23 zu gewährleisten, ist eine Federeinrichtung 61 in Form einer Spiralfeder vorgesehen. Der Federkörper 63, d.h. der Spiral-Federkörper 63 (Fig.1), greift außenliegend an dem Nachstellhebel 55 an und liegt auf dessen Seite außen auf.

Das freie nach außen weisende Ende des Federkörpers 63 geht von seinem eigentlichen ringförmigen Federabschnitt in einen durch den Federkörper 63 hindurch zurückgeführten geraden Federbügel 65 über, der am gegenüberliegenden Ende über einen bogenförmigen Ankerabschnitt 67 am gegenüberliegenden Seitenteil 11' des Spreizstössels 11 verankert ist. Zur Verankerung der Federeinrichtung 61 ist in den Nachstellhebel ein entsprechendes Langloch eingebracht, welches das Hindurchstecken des Federbügels 65 erlaubt. Das gleiche gilt für das den Nachstellhebel 55 tragende Seitenteil 11' des Spreizstössels 11. Das gegenüberliegende Seitenteil 11' weist ebenfalls durch einen Steg getrennt ein Langloch und ein Rundloch auf, wobei der Ankerabschnitt 67 durch das Langloch 69 hindurchgesteckt und mit dem Ende des umgebogenen Ankerabschnittes 67 in das benachbarte Rundloch 71 einhängbar ist.

Um die Nachstellung auszulösen, ist ein stabförmiges Verbindungsglied 73 vorgesehen, welches mit einem Z.B. Z-förmigen Einhängabschnitt 75 in einer entsprechenden und später nach genauer beschriebenen Langlochausnehmung 87 am zugeordneten Steg 15 der einen Bremsbacke 1 einhängbar ist. Das eine Ende des stabförmigen Verbindungsgliedes 73 ist über einen Z-förmigen Einhängabschnitt 79 durch eine Bohrung 81 (Fig.2) im Nachstellhebel 55 eingehängt, wobei die beiden Z-förmigen Einhängabschnitte 75 und 79 uni 90° zueinander versetzt liegen.

Dabei kann sowohl in Bereich der Langlochausnehmung 87 am Steg 15 bzw. im Bereich der Bohrung 81 beim Nachstellhebel 55 die Abmessung derart sein, daß jeweils dort oder insgesamt gemeinsam ein ausreichendes Lüftspiel zwischen Belag und Trommel gesteuert werden kann.

Um sicherzustellen, daß eine Nachstellung nur bei bzw. nach erfolgter Bremsung in Vorwärtsdrehrichtung 85 erfolgen kann, greift hier das Verankerungsende, daß heißt der Einhängabschnitt 75 des stabförmigen Verbindungsgliedes 73 durch eine in axialer Verlängerung des Verbindungsgliedes 73 vorgesehene Doppel-Langlochausnehmung 87 in der Bremsbacke 3' bzw. dessen Backenträger 3', der in diesem Bereich unter Ausbildung eines Zwischenraumes 89 doppelwandig ausgebildet ist. Durch eine Sicherungsscheibe 91 ist das Verankerungsende 75 gegen ein unbeabsichtigtes Herausrutschen gesichert.

Der Steg 15 des Belagträgers 3'' der zwischen die Doppelwand 15 des Backenträgers 3', also in den Zwischenraum 89 eintaucht, ist mit einer Sicherungsnase 93 versehen.

Die Anordnung ist nunmehr derart, daß der quer zur Stegebene durch die deckungsgleich hintereinander liegenden Langlochausnehmungen 87 in den beiden Stegwänden 15' hindurchragende Verankerungsende 75 am rechten Begrenzungsende der Doppellanglochausnehmung 87 zu liegen kommt, wobei in dieser Neutralstellung sowie auch bei Betätigung des Spreizschlosses 9 bei Vorwärtsbremsung die Sicherungsnase 93, wie in der vergrößerten Detaildarstellung gemäß Figur 4, hintergreift und somit am Langlochende sichert. Bei einer Bremsung in Vorwärtsrichtung ist dabei der Mechanismus wie folgt. Bei Betätigung des Spreizschlosses 9 wird der Nachstellhebel 55 mit dem Spreizstössel 11 in Figur 6 nach rechts und das Verbindungsglied 73 mit der gegenüberliegenden Bremsbacke 1 nach links verschoben. Dadurch wird je nach Größe des Spreizweges der Nachstellhebel 55 im Uhrzeigersinn um seine Drehachse, d.h. um seine Lasche 53 gedreht.

Sobald der Bremsbelag-Verschleiß ausreichend groß wird, so daß die Spreizbewegung bei einem Bremsvorgang ausreichend groß wird, kann die Nachstellklinke 57 einen Zahn des Nachstellzahnrades 23 hintergreifen. Sobald der Bremsvorgang beendet wird, werden die beiden Bremsbacken wieder über die Federeinrichtung 33 in ihre neutrale Ausgangsstellung zurückgeführt, so daß über das stabförmige Verbindungsglied 73 nunmehr der Nachstellhebel 55 ebenfalls wieder nach Überwindung des Lüftspiels im Gegenuhrzeigersinn in seine Ausgangsstellung verdreht wird und damit das Nachstellzahnrad um eine Rastung verdreht. Entsprechend der Gewindesteigung wird dadurch der Nachstellbolzen 25 um ein gewisses Maß im Sinne einer Axialverlängerung relativ zur Nachstellhülse verstellt. Das Lüftspiel ist dabei stets so gering, daß der Nachstellhebel 55 einen nächsten Zahn am Zahnrad 23 nicht überrasten kann, solange kein Belagverschleiß festgestellt wird.

Bei einer Bremsung in Rückwärtsdrehrichtung 95 jedoch wird der Belagträger 3'' von seiner in Figur 1 gezeigten Stellung - die er bei unbelasteter Bremse wie bei Bremsung in Vorwärtsdrehrichtung einnimmt - in Rückwärtsdrehrichtung 95 mitgenommen und radial mit seinem Gleitkurvenabschnitt 97 in Richtung auf den unteren Anschlagbolzen 99 zu verschwenkt. Schon bei minimaler radialer Verschwenkung des Belagkörpers 3'' wird die formschlüssige Verbindung aufgehoben, d.h. sobald der Backenträger aufgrund der Rückfahrautomatik eine Schwenkbewegung macht. Die Freigabe findet also nicht erst dann statt, wenn der Belagträger 3'' in der untersten Stellung ist! Bei dieser Schwenkbewegung wird also die Sicherungsnase 93 aus dem Bereich der Langlochausnehmung 87 mitherausverschwenkt, so daß nunmehr das Verankerungsende 75 des Verbindungsgliedes 73 nicht mehr am Endanschlag des Langloches 87 gesichert ist. Bei einer Bremsung in Rückwärtsdrehrichtung kann dann aber der zusätzlich stark nach außen geschwenkte Backenträger 3' das Verbindungsglied 73 nicht mitnehmen, da dessen Verankerungsende 75 ungesichert ist und eine Relativbewegung im Langloch ausführen kann. Damit kann also der Nachstellhebel 55 keine Auswärtsschwenkbewegung und Hinterrastung eines nächsten Zahnes beim Nachstellzahnrad 23 ausführen.

Die Sicherungsnase 93 am Bremsbelagträger 3'' kann so ausgebildet werden, daß bei Zurückbewegung des Belagträgers 3'' aus seiner Verschwenklage in Rückwärtsdrehrichtung in seine Neutralstellung bzw. Stellung bei Vorwärtsdrehrichtung der Bremstrommel stets ein sicheres Einfangen des Verbindungsgliedes 73 gewährleistet ist. Dies kann beispielsweise durch eine Abflachung 101 gewährleistet sein.

Möglich wäre auch, daß selbst in der Rückwärtsstellung in verschwenkter Lage des Belagträgers 3'' das obere Ende der Sicherungsnase 93 noch in den Bereich der Doppel-Langlochausnehmung 87 eingreift, allerdings so weit links liegend, daß in dieser Stellung der Einhängabschnitt 75 des Verbindungsgliedes 73 stets freigegeben ist.

## Patentansprüche

1. Innenbackenbremse für auflaufgebremste Anhänger mit den folgenden Merkmalen
- es sind zwei Bremsbacken (1, 3) vorgesehen,
- die Bremsbacken (1, 3) stützen sich an ihrem einen Ende an einem am Bremsschild (5) gehaltenen Widerlager (7) ab,
- die Bremsbacken (1, 3) stehen an ihren gegenüberliegenden Enden mit einem Spreizschloß (9) mit einem Spreizstössel (11) und einem damit zusammenwirkenden Spreizhebel (13) entgegen der Kraft einer Federeinrichtung (33) in Wirkverbindung,
- es ist eine Nachstelleinrichtung (21) vorgesehen, die im Falle der Nachstellung die axiale Wirklänge des Spreizschlosses (9) zwischen den gegenüberliegenden Enden der Bremsbacken (1, 3) vergrößert einstellt,
- die Nachstelleinrichtung (21) umfaßt einen Nachstellbolzen (25) und eine gegenüber dem Nachstellbolzen (25) relativ verdrehbare Nachstellhülse (19),
- der Nachstellbolzen (25) ist gegenüber der Nachstellhülse (19) an der zugeordneten Bremsbacke (1) verdrehsicher gehalten,
- die Nachstellhülse (19) ist vorzugsweise am stirnseitigen Ende des Spreizstössels (11) durch das Nachstellzahnrad (23) gehalten,
**gekennzeichnet durch** die folgenden weiteren Merkmale
- es ist eine Rückfahrautomatik vorgesehen,
- zur Erzielung einer Rückfahrautomatik ist zumindest eine Bremsbacke (3) zweigeteilt und umfaßt einen Bremsbackenträger (3') und einen Belagträger (3''), der auf dem Bremsbackenträger (3') anschlagbegrenzt bei Rückwärtsfahrt in Umfangs- und Radialrichtung zur Aufhebung der Bremswirkung verschiebbar ist,
- die Nachstelleinrichtung (21) ist als automatische Nachstelleinrichtung ausgebildet,
- an einem Seitenteil (11') des Spreizstössels (11) ist ein Nachstellhebel (55) mit einer in das Nachstellzahnrad (23) eingreifenden Nachstellklinke (57) um eine Drehachse (51) verschwenkbar gelagert,
- der Nachstellhebel (55) ist mittels einer Federeinrichtung (61) in Richtung auf das Nachstellzahnrad (23) vorgespannt gehalten,
- zur Betätigung des Nachstellhebels (55) steht ein Verbindungsglied (73) zum einen mit dem Nachstellhebel (55) und zum anderen mit der bei einer Bremsung zum Nachstellhebel (55) gegensinnig bewegbaren Bremsbacke (1) oder einem zugehörigen, hiermit mit bewegbaren Teil der Spreizeinrichtung in Wirkverbindung, und
- das Verbindungsglied (73) ist an seinen Anschlußstellen so verankert, daß bei betätigtem Spreizschloß (9) eine für eine Nachstellung an sich erforderliche Auswärtsschwenkbewegung einschließlich einer nachfolgenden Rückschwenkung des Nachstellhebels (55) bei gelöster Bremse nur dann durchführbar ist, wenn eine Bremsung in Vorwärtsfahrt erfolgte.

2. Innenbackenbremse nach Anspruch 1, **dadurch gekennzeichnet**, daß an den Verankerungsstellen des Verbindungsgliedes (73) am Nachstellhebel (55) und/oder an der zugeordneten Bremsbacke (1) oder den mit diesen mitbewegten Teilen der Spreizeinrichtung ein Lüftspiel vorgesehen ist.

3. Innenbackenbremse nach Anspruch 1 oder 2, **dadurch gekennzeichnet**, daß das Verankerungsende (75') des Verbindungsgliedes (73) in eine mit einer Axialkomponente zu dem Verbindungsglied (73) verlaufende Langlochausnehmung (87) eingreift, wobei das durch die Langlochausnehmung (87) hindurchgreifende Verankerungsende (75') des Verbindungsgliedes (73) in Neutralstellung wie auch in Bremsstellung bei Vorwärtsfahrt durch eine mit dem Belagträger (3'') in Verbindung stehende oder dazugehörende Sicherungsnase (93) gegen eine Relativverschiebung in der Langlochausnehmung (87) gesichert und bei Rückwärtsdrehrichtung der Bremstrommel für eine freie Bewegung in der Langlochausnehmung (87) freigegeben ist.

4. Innenbackenbremse nach einem der Ansprüche 1 bis 3, **dadurch gekennzeichnet**, daß zumindest eine Halbzylinderform (11''') in Axialrichtung mit einer zumindest leicht überstehenden Nase (24) versehen ist, die in eine Zahnlücke zwischen zwei benachbarten Zähnen des Nachstellzahnrades (23) in der Ruhestellung des Nachstellzahnrades (23) vorzugsweise geringfügig eingreift.

5. Innenbackenbremse nach einem der Ansprüche 1 bis 4, **dadurch gekennzeichnet**, daß das stirnseitige Ende des Spreizstössels (11) zwei gegenüberliegende und zu den beiden Seitenteilen (11') des Spreizstössels (11) gehörende Halbzylinderformen (11''') aufweist, die die Nachstellhülse (19) umgreifen und in Radialrichtung sichern.

6. Innenbackenbremse nach einem der Ansprüche 1 bis 5, **dadurch gekennzeichnet**, daß der Spreizstössel (11) und der Spreizhebel (13) drehachsenkörperfrei zusammengefügt sind.

7. Innenbackenbremse nach einem der Ansprüche 1 bis 6, **dadurch gekennzeichnet**, daß der Spreizhebel (13) mit einem mit einer Aufnahmeöffnung (31) ausgestatteten Verschwenkabschnitt (27) versehen ist, in welchen ein konvexer Anlageabschnitt (29) des Spreizstössels (11) in Abstützrichtung einsetzbar ist.

## Claims

1. A internal shoe brake for overrun brake trailers having the following features:
- two brake shoes (1 and 3) are provided,
- the brake shoes (1 and 3) have one end thereof bearing against an abutment (7) mounted on the backing plate (5),
- the brake shoes (1 and 3) are operatively connected at their opposite ends with an expanding unit (9) which has an expanding plunger (11) and an expanding lever (13) cooperating with it against the force of a spring means (33),
- an adjustment device (21) is provided, which, when adjustment is performed, sets the axial operative length of the expanding unit (9) between the opposite ends of the brake shoes (1 and 3) at an increased value,
- the adjustment device (21) comprises an adjustment pin and an adjustment sleeve (19) able to be turned in relation to the adjustment pin (25),
- the adjustment pin (25) is securely held to prevent rotation in relation to the adjustment sleeve (19) on the associated brake shoe (1) and
- the adjustment sleeve (10) is preferably held on the end of the expanding plunger (11) by the adjustment gear wheel (23),
characterized by the following further features:
- an automatic reverse travel means is provided,
- in order to produce such automatic reverse travel means at least one brake shoe (3) is divided into two parts and comprises a brake shoe carrier (3') and a pad carrier (3''), which on the brake shoe carrier (3') is limited by abutment during reverse travel in the circumferential and radial directions in order to overcome the braking action,
- the adjustment device is designed in the form of an automatic adjustment device,
- on one side part (11') of the expanding plunger (11) an adjustment lever (55) is bearinged which has an adjustment pawl (57) meshing with the adjustment gear wheel (23) and is able to be pivoted about an axis (51) of turning,
- the adjustment lever (55) is urged by means of a spring device (61) toward the adjustment gear wheel (23) with a biasing action,
- for the operation of the adjustment lever (55) a connecting member (73) is operatively connected on the one hand with the adjustment lever (55) and on the other hand with the brake shoe (1), adapted to move in the opposite direction to the adjustment lever (55) during braking, or with an associated part, adapted to move therewith, of the expanding device, and
- the connecting member (73) is so anchored on its connection points that when the expanding unit (9) is actuated an outward movement necessary for an adjustment, including a subsequent return pivoting of the adjustment lever (55) with the brake disengaged is only possible if braking in the forward direction takes place.

2. The internal shoe brake as claimed in claim 1, characterized in that play is provided at the points of anchoring of the connecting member (73) on the adjustment lever (55) and/or on the associated brake shoe (1) or on the parts, entrained with the same, of the expanding device.

3. The internal shoe brake as claimed in claim 1 or in claim 2, characterized in the anchored end (75') of the connecting member (73) fits into a slot-like recess (87) extending with an axial component toward the connecting member (73), the anchored end (75') extending through the slot-like recess (87), of the connecting member (73) is secured in the neutral position and also in the braking possible during forward travel by a securing spur (93) connected with the pad carrier (3'') or belonging to it to prevent relative displacement in the slot-like recess (87) and during reverse rotation of the brake drum is released for free movement in the slot-like recess (87).

4. The internal shoe brake as claimed in any one of the claims 1 through 3, characterized in that least one semi-cylindrical form (11''') is provided in the axial direction with an at least slightly projecting spur (24), which fits, preferably to a slight degree, into a gap between adjacent teeth on the adjustment gear wheel (23) in the neutral position of the adjustment gear wheel (23).

5. The internal shoe brake as claimed in any one of the claims 1 through 4, characterized in that the end of the expanding plunger (11) possesses two oppositely placed semi-cylindrical forms (11'''), which belong to the two side parts (11') of the expanding plunger (11) and fit around the adjustment sleeve (19) and secure the same in the radial direction.

6. The internal shoe brake as claimed in any one of the claims 1 through 5, characterized in that the expanding plunger (11) and the expanding lever (13) are joined together for movement about three axes of a body.

7. The internal shoe brake as claimed in any one of the claims 1 through 6, characterized in that the expanding lever (13) is provided with a pivoting section (27) possessing a receiving opening (31), into which a convex abutment section (29) of the expanding plunger (11) is able to be inserted in the support direction.

## Revendications

1. Frein à mâchoires internes pour remorque à freins d'accostage présentant les caractéristiques suivantes :
- il est prévu deux mâchoires de frein (1, 3),
- des mâchoires de frein (11, 3) appuient par l'une de leurs extrémités sur une butée (7) maintenue sur le plateau de frein (5),
- les mâchoires de frein (1, 3) sont en connexion fonctionnelle par leurs extrémités opposées avec une fixation expansible (9), avec un poussoir expansible (11) et avec un levier d'expansion (13) coopérant avec celui-ci contre la force d'un élément élastique (33),
- il est prévu un dispositif de réajustage (21) qui, dans le cas d'un réajustage, règle en l'augmentant la distance d'action axiale de la fixation expansible (9) entre les extrémités opposées des mâchoires de frein (1, 3),
- le dispositif de réajustage (21) comprend un boulon de réajustage (25) et une douille de réajustage (19) pouvant tourner relativement par rapport au boulon de réajustage (25),
- le boulon de réajustage (25) est maintenu sans possibiité de rotation par rapport à la douille de réajustage (19) sur la mâchoire de frein correspondante (1),
- la douille de réajustage (19) est maintenue, de préférence, à l'extrémité frontale du poussoir expansible (11) par l'engrenage de réajustage (23),
caractérisé par les caractéristiques suivantes :
- il est prévu un mécanisme automatique de marche arrière,
- pour réaliser le mécanisme automatique de marche arrière, il existe au moins une mâchoire de frein (3) en deux pièces, qui comprend un support de mâchoire de frein (3') et un support de garniture (3'') qui peut se déplacer sur le support de mâchoire de frein (3') en étant limité par une butée en cas de marche arrière en direction périphérique et radiale pour supprimer l'effet de freinage,
- le dispositif de réajustage (21) se présente sous forme d'un dispositif de réajustage automatique,
- sur une pièce latérale (11') du poussoir expansible (11), un levier de réajustage (55) est monté à pivot autour d'un axe de rotation (51), avec un cliquet de réajustage (57) engrenant avec l'engrenage de réajustage (23),
- le levier de réajustage (55) est maintenu dans un état de précontrainte dans la direction vers l'engrenage de réajustage (23) au moyen d'un dispositif élastique (61),
- pour actionner le levier de réajustage (55), il existe un élément de jonction (73) en liaison fonctionnelle, d'une part, avec le levier de réajustage (55) et, d'autre part, avec la mâchoire de frein (1) pouvant être déplacée en sens opposé par rapport au levier de réajustage (55) en cas de freinage, ou avec une pièce correspondante, et donc mobile, du dispositif expansible, et
- l'élément de jonction (73) est ancré à son point de raccordement de façon que, en cas de manoeuvre de la fixation expansible (9), un déplacement de pivotement vers l'extérieur indispensable en soi pour le réajustage, y compris un pivotement de retour ultérieur du levier de réajustage (55), ne puisse être effectué, si les freins sont relâchés, que si un freinage se produit en marche avant .

2. Frein à mâchoires internes selon la revendication 1 caractérisé en ce que, aux points d'ancrage de l'élément de jonction (73) au levier de réajustage (55) et/ou à la mâchoire de frein correspondante (1) ou aux pièces du dispositif expansible entraîné avec celle-ci, il est prévu un intervalle d'air.

3. Frein à mâchoires internes selon la revendication 2, caractérisé en ce que l'extrémité d'ancrage (75') de l'élément de jonction (73) s'engage dans une cavité en forme de trou allongé (87) disposée avec une composante axiale par rapport à l'élément de jonction (73), si bien que l'extrémité d'ancrage (75') de l'élément de jonction (73) s'engageant dans la cavité en forme de trou allongé (87) est protégée en position neutre tout comme en position de freinage en marche avant par un ergot de sécurité (93) en liaison avec le support de garniture (3'') ou faisant partie de celui-ci, pour empêcher un déplacement relatif dans la cavité en forme de trou allongé (87) et que, en cas de rotation dans le sens de la marche arrière du tambour de frein, celui-ci est dégagé pour permettre un déplacement libre dans la cavité en forme de trou allongé (87).

4. Frein à mâchoires internes selon l'une des revendications 1 à 3, caractérisé en ce qu'il est prévu au moins une forme semi-cylindrique (11''') en direction axiale avec un ergot (24) faisant saillie au moins légèrement, qui s'engage dans un intervalle entre deux dents voisines de l'engrenage de réajustage (23) en position de repos de l'engrenage de réajustage (23) et, de préférence, dans une faible mesure.

5. Frein à mâchoires internes selon l'une des revendications 1 à 4, caractérisé en ce que l'extrémité frontale du poussoir expansible (11) présente deux formes semi-cylindriques (11''') opposées et faisant partie des deux pièces latérales (11') du poussoir expansible (11), ces formes entourant la douille de réajustage (19) et la maintenant en direction radiale.

6. Frein à mâchoires internes selon l'une des revendications 1 à 5, cractérisé en ce que le poussoir expansible (11) et le levier d'expansion (13) sont assemblés en l'absence d'une pièce servant d'axe de rotation.

7. Frein à mâchoires internes selon l'une des revendications 1 à 6, caractérisé en ce que le levier d'expansion (13) est pourvu d'une section de pivotement (27) équipée d'une ouverture de réception (31), dans laquelle peut être placée une section d'appui convexe (29) du poussoir expansible (11) en direction d'appui.
